# EUROPEAN PATENT SPECIFICATION

(11) **EP 3 203 709 B1**
(45) Date of publication and mention of the grant of the patent: **26.09.2018**
(21) Application number: 17152961.3
(22) Date of filing: 25.01.2017
(51) Int. Cl.: H04L 29/08

(54) **CLOUD SERVICE SERVER AND METHOD FOR MANAGING CLOUD SERVICE SERVER**
CLOUD-SERVER UND VERFAHREN ZUR VERWALTUNG DES CLOUD-DIENSTSERVERS
SERVEUR DE SERVICES EN NUAGE ET PROCÉDÉ DE GESTION DE SERVEUR DE SERVICES EN NUAGE

(30) Priority: 05.02.2016 TW 105103987
(43) Date of publication of application: 09.08.2017
(73) Proprietor: Synology Incorporated, Taipei 103 (TW)
(72) Inventor: Chiang, Chih-Cheng, 100 Taipei City (TW)
(74) Representative: Michalski Hüttermann & Partner Patentanwälte mbB

(56) References cited:
- US-A1- 2012 192 263
- US-A1- 2013 346 472

## Description

### BACKGROUND OF THE INVENTION

### Field of the Invention

The present invention relates to registration, and in particular it relates to a method of registration of third-party software.

### Description of the Related Art

In recent years, personal electronics, such as a personal computer, a handheld device and a mobile device, have become more and more advanced and multi-functional. For example, the mobile device can have email receiving applications, phonebook management applications, media playing applications, and a wide variety of applications with different functions. Due to the large array of functions, the mobile device has brought convenience to people's lives and has become a necessity in everyone's life.

Nowadays, users need more and more memory space in the personal devices for installing various applications and storing important files. A cloud storage device has become a solution to back-up the important files and save the memory space for the personal devices. People can chose a public cloud or establish their own private cloud station to store important files. Public cloud storage provider such as Google and Dropbox are known by most people. Third-party applications can easily find the registration page of Google and Dropbox to use their cloud storage service. Once the third-party application is registered, the files stored in the cloud can be edited by the third-party application. However, a network address of a private cloud station are unlikely to be known by others, because it is private unless the owner shares its network address, login information to others publically. Therefore, it is difficult for the provider of the third-party applications to register with the personal/private network storage servers.

US 2012/192263 A1 describes an access gateway which establishes a link with at least one terminal device via a user interface module, and obtains a cloud storage service list from a backend server.

US 2013/346472 A1 describes techniques for receiving a request from a client proxy device to access a file on a server, whereby the file is associated with a uniform resource locator (URL).

### BRIEF SUMMARY OF THE INVENTION

The invention is defined by the features of the independent claims. Preferred embodiments are defined by the features of the dependent claims.

A detailed description is given in the following embodiments with reference to the accompanying drawings.

An exemplary embodiment provides a method for managing a cloud service server. The method includes: receiving an HTTP request from a user device through the Internet; transmitting a cloud service page to the user device through the Internet in response to the HTTP request; receiving a registration request transmitted by the cloud service page through the Internet; and transmitting a redirect command to the user device through the Internet in response to the registration request for allowing the user device to register the cloud service page with the network storage server through a registration page, in which the redirect command is configured to redirect the user device to the registration page of a network storage server.

Another exemplary embodiment provides a cloud service server used for providing cloud computing services the cloud service server includes a storage device, a communication device and a processor. The storage device stores a cloud service page. The communication device transmits data to the Internet and receiving data from the Internet. The processor enables the communication device to transmit the cloud service page to the user device through the Internet in response to an HTTP request received from a user device through the Internet by the communication device, and in response to a registration request received from the cloud service page through the Internet by the communication device, the processor enables the communication device to transmit a redirect command configured to redirect the user device to a registration page of a network storage server through the Internet for allowing the user device to register the cloud service page with the network storage server through the registration page.

### BRIEF DESCRIPTION OF THE DRAWINGS

FIG. 1 is a schematic diagram illustrating a cloud service system in accordance with an embodiment.
FIG. 2 is a flowchart of a method for managing a cloud service server in accordance with an embodiment.

### DETAILED DESCRIPTION OF THE INVENTION

In the following description, numerous details, examples and embodiments are set forth for the purpose of explanation. However, one of ordinary skill in the art will recognize that the invention is not limited to the embodiments set forth and that the invention may be practiced without some of the specific details discussed.

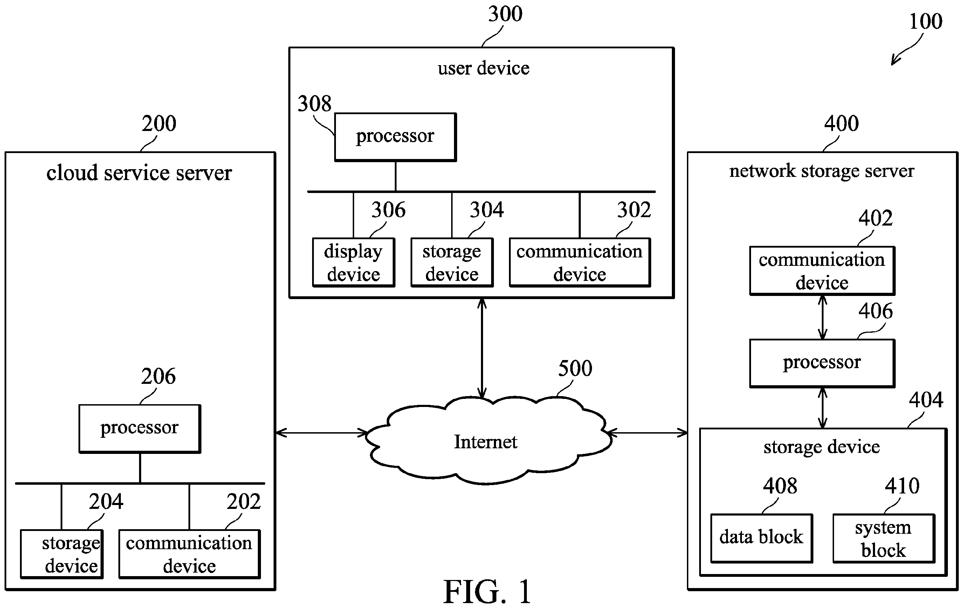

FIG. 1 is a block diagram illustrating a cloud service system in accordance with an embodiment. The cloud service system 100 includes a cloud service server 200, a user device 300, a network storage server 400. The cloud service server 200, the user device 300 and the network storage server 400 are linked together through the Internet 500 in order to communicate with each other, in which the user device 300 is configured to access the data of the network storage server 400 through the Internet 500, the network storage server 400 is configured to provide memory space for the user device 300, and the cloud service server 200 is configured to provide cloud computing services for the user device 300 to process the data of the network storage server 400, but it is not limited thereto. Namely, the user device 300 does not need the cloud service server 200 to provide the data and program codes of the cloud computing services, the user device 300 can edit and process the data stored in the network storage server 400 through the cloud computing services executed by the cloud service page of the cloud service server 200.

In one of the embodiments, the network storage server 400 is a Network Attached Storage (NAS) set up by individual users. Generally, the network address, such as an internet protocol address, of the network storage server 400 is not known by people except for the user of the network storage server 400. Namely, the third-party cloud computing service providers, such as the owner of the cloud service server 200, will not be able to visit the network storage server 400 and register their cloud computing services. Therefore, the user of the network storage server 400 cannot have the services provided by the third-party cloud computing service provider. However, in the embodiments of the present invention, although the third-party cloud computing service provider is not able to register their services with the network storage server 400 by itself, the data of the network storage server 400 can be accessed by the cloud service server 200. That is, the accessing permission of the data stored in the network storage server 400 can be authorized to the computing service module of the cloud service server 200.

The cloud service server 200 can be a server providing the third-party network application. The cloud service server 200 can provide cloud computing services for users, and can be linked to by a URL address, such as a URL link with a domain name associated with the cloud computing services. The cloud service server 200 includes, but is not limited to, a communication device 202, a storage device 204 and a processor 206. The communication device 202 transmits data to the Internet 500 and receives data from the Internet 500. For example, the communication device 202 can be a wired network card or a wireless network card compatible with GPRS, 802.11, 3G, and/or 4G, but it is not limited thereto. The storage device 204 stores program codes and elements of a cloud service page and program codes of the cloud computing services provided by the cloud service page, in which the cloud service page can be a home page of the cloud computing service provided by the cloud service server 200, in which users can access the home page and use the operation interface of the home page to perform the corresponding application. The cloud computing services can be an application. For example, the cloud computing service provided by the cloud service server 200 can be a third-party software configured to process the data stored in the network storage server 400 in response to the operations on the operation interface displayed on the web page that is opened by the user device 300. In one of the embodiments of the present invention, the cloud computing service provided by the cloud service server 200 can be a file conversion service for converting video files and image files, an editor for editing video files and image files, or virus scanning service, etc. Furthermore, the storage device 204 can be a flash memory, a hard drive or a solid state drive, etc., for storing the parameters and program codes for the processor 206, but it is not limited thereto. In other embodiments, the storage device 204 further includes a random access memory. The processor 206 can include a general purpose processor, a central-processing unit (CPU), a Graphic Processing Unit (GPU) or a plurality of processing units in a parallel processing environment.

More specifically, when the communication device 202 receives an HTTP request form the user device 300 through the Internet 500, the processor 206 enables the communication device 202 to transmit the cloud service page to the user device 300 in response to the received HTTP request, in which the received HTTP request can be an HTTP request configured to open the cloud service page. Namely, the communication device 202 can transmit the program codes and files of the cloud service page to the user device 300 by the Internet 500, such that the user device 300 can show the cloud service page by the program codes and files of the cloud service page. It should be noted that the operation interface of the cloud service page can have an input column arranged to receive a registration request from the user of the user device 300 for enabling the cloud service server 200 to perform registration.

When the user inputs the registration request on the cloud service page, the cloud service page enables the user device 300 to transmit the registration request to the cloud service server 200. Next, when the communication device 202 receives a registration request transmitted (returned) by the cloud service page through the Internet 500, the processor 206 responses to the received registration request and enables the communication device 202 to transmit a redirect command, which is arranged to redirect to a registration page of the network storage server 400, such that the user device 300 can register the cloud service provided by the cloud service server 200 with the network storage server 400 through the registration page.

In one of the embodiments, the registration request can include the address of the registration page of the network storage server 400. Namely, the user needs to input the address of the registration page of the network storage server 400 on the column of the cloud service page, and the user device 300 needs to transmit the address of the registration page to the cloud service server 200, such that the cloud service server 200 can obtain the address of the registration page of the network storage server 400.

Next, the processor 206 produces the redirect command according to the address of the registration page included in the registration request, and transmits the redirect command by the communication device 202 to the user device 300, such that the user device 300 can switch to the registration page of the network storage server 400 from the cloud service page in response to the redirect command, so as to perform the registration operation.

In one of the embodiments, when the processor 206 transmits the redirect command to the user device 300 by the communication device 202, the processor 206 can enable the communication device 202 to transmit a registration return address of the cloud service server 200 to the user device 300. Therefore, the user of the user device 300 can input the information related to the cloud service page on the registration page of the network storage server 400 to register the cloud service page with the network storage server 400. The user device 300 transmits the registration return address to the network storage server 400 through the registration page. Next, the network storage server 400 can transmit an authorization token to the cloud service server 200 through the registration return address to allow the cloud service page of the cloud service server 200 to access the data stored in the network storage server 400 by the authorization token, in which when the cloud service server 200 receives the authorization token by the communication device 202, the cloud service server 200 stores the authorization token in the storage device 204. In one of the embodiments, the authorization token may include an encrypted token of the registration information of the cloud service page. For example, the authorization token may include the identification code of the cloud service page, the identification code of the network storage server 400, and the effective period of the authorization token, but it is not limited thereto. In other embodiments, the authorization token may include information of user account of the network storage server 400.

In one of the embodiments, the network storage server 400 can allow the user device 300 to register the cloud service page with the network storage server 400 through the registration page after the user identity of the user device 300 is verified. More specifically, when the user device 300 receives the redirect command, the user device 300 can transmit an HTTP request of a registration page to the network storage server 400. Next, the network storage server 400 can transmit an authentication page to the user device 300 through the Internet 500 first, and the network storage server 400 transmits the registration page to the user device 300 through the Internet 500 after the user operates the user device 300 to confirm the user account and user password on the authentication page. Namely, after verifying that the user account and the user password are correct, the network storage server 400 allows the user of the user device 300 to register the cloud service page, which is provided by the cloud service server 200, with the network storage server 400 by using the registration page.

The user device 300 can be the same type of the electronic device with the cloud service server 200 or other types of electronic device, such as computer systems, smartphones, notebooks, etc., and one skilled in the art will understand that the types of the user device 300 is not intended to limit the present invention. The user device 300 includes a communication device 302, a storage device 304, a display device 306, and a processor 308. The communication device 302 is configured to transmit data to the Internet 500 and receive data from the Internet 500. For example, the communication device 302 can be a wireless network card compatible with GPRS, 802.11, 3G and/or 4G, but it is not limited thereto. The storage device 304 has a program code of Web browser configured to be executed by the processor 308. The storage device 304 can be a flash memory, a hard disk, a solid state drive, etc., configured to store the parameters and program codes for the processor 308, but it is not limited thereto. The display device 306 can be an LCD display device, an LED display device, a flexible display device, etc., but it is not limited thereto. The processor 308 may include a general purpose processor, a central-processing unit (CPU), a Graphic Processing Unit (GPU) or a plurality of processors in a parallel processing environment.

More specifically, the processor 308 is configured to read the program codes stored in the storage device 304 to execute the Web browser, and enable the communication device 302 to receive and transmit the data of the web browser via the Internet. The network browser is configured to link to a cloud service page of the cloud service server 200, and transmit the address of a registration page of the network storage device 400 to the cloud service server 200. Namely, the user of the user device 300 can input the address (URL) of the cloud service page of the cloud service server 200 into the Web browser or click the link in the cloud service page showed on the Web browser to transmit an HTTP request of the cloud service page to the cloud service server 200. Next, the cloud service server 200 transmits the program codes and files of the cloud service page to the user device 300 through the Internet 500 in response to the HTTP request. The processor 308 shows the cloud service page in the Web browser by using the received program codes and files related to the cloud service page. Next, the user can input a registration request in a column of the cloud service page, and the cloud service page will enable the communication device 302 to transmit the registration request to the cloud service server 200, in which the registration request includes an IP address of the registration page of the network storage server 400. The cloud service server 200 transmits a redirect command configured to redirect to the registration page and a registration return address of the cloud service server 200 to the user device 300 in response to the registration request.

When the communication device 302 of the user device 300 receives the redirect command arranged to redirect to a registration page from the cloud service server 200, the processor 308 can enable the communication device 302 to transmit an HTTP request of the registration page to the network storage server 400. Next, the network storage server 400 can transmit an authentication page to the Web browser of the user device 300 through the Internet 500, and the network storage server 400 transmits the registration page to the user device 300 through the Internet 500 after the user operates the web browser to confirm the user account and the user password on the authentication page. Namely, after the user account and the user password are verified as being correct, the network storage server 400 allows the user of the user device 300 to register the cloud service page, which is provided by the cloud service server 200, with the network storage server 400 by using the registration page. It should be noted that the registration page executed by the web browser is further arranged to enable the communication device 302 to transmit the registration return address of the cloud service server 200 to the network storage server 400 while the cloud service page provided by the cloud service server 200 is registered with the network storage server 400. Therefore, the network storage server 400 can transmit an authorization token to the cloud service server 200 by using the registration return address of the cloud service server 200. It should be noted that the web browser can be used to connect to a file operation page of the network storage server 400 for allowing users to access and edit at least one file stored in the network storage server 400 on the file operation page.

In another embodiment, a user interface (UI) of the file operation page is configured to receive a selecting signal, and one of the files on the UI can be selected according to the selecting signal. A column on the UI of file operation page can be showed, and the user may fill the column by the address of the cloud service page of the cloud service server 200. Next, since the address of the cloud service page of the cloud service server 200 is obtained, the web browser can transmit an HTTP request of the cloud service page to the cloud service server 200 according to the user's operation on the UI. Therefore, the file operation page on the web browser can be switched to the cloud service page to perform the steps of connecting the cloud service page of the cloud service server 200 and transmitting the address of the registration page of the network storage server 400 to the cloud service server 200.

In another embodiment, the UI file operation page is configured to receive a selecting signal and one or more files can be selected in response to the selecting signal, and the UI of the file operation page further shows a list including a plurality of cloud services images, in which each of the cloud services images corresponds to an address of a unique cloud service page of a unique cloud service server. Next, a specific cloud services image can be selected in response to the user's operation, and enable the web browser to transmit an HTTP request to a specific cloud service server having a specific cloud service page corresponding to the specific cloud services image. Therefore, the web browser can be switched to the specific cloud service page from the file operation interface to perform the steps of connecting the cloud service page of the cloud service server 200 and transmitting the address of the registration page of the network storage server 400 to the cloud service server 200.

The network storage server 400 can be a Network Attached Storage (NAS) configured to provide the user to access the stored data through the Internet 500. Namely, the network storage server 400 can be implemented as a private cloud. The network storage server 400 includes a communication device 402, a storage device 404 and a processor 406. The communication device 402 is arranged to transmit data to the Internet 500 and receive data from the Internet 500. For example, the communication device 402 can be a wireless network card compatible with GPRS, 802.11, 3G and/or 4G, but it is not limited thereto. The storage device 404 includes a data block 408 and a system block 410. The data block 408 is configured to provide large memory space for the user of the user device 300 to store data. The system block 410 is configured to store the program codes and parameters arranged to be used by the processor 406. For example, the system block 410 may include the program codes and files of the operation system of the network storage server 400, but it is not limited thereto, in which the program codes and files of the operation system can include the program codes and files of the registration page, the authentication page, and the file operation page/interface. Moreover, the storage device 404 can be a flash memory, a hard disk, a solid state drive, etc., but it is not limited thereto. The processor 406 may include a general purpose processor, a central-processing unit (CPU), a Graphic Processing Unit (GPU) or a plurality of processors in a parallel processing environment.

More specifically, the processor 406 can enable the communication device 402 to provide the registration page and/or the authentication page to the web browser of the user device 300 in response to the HTTP request produced by the redirect command executed by the user device 300, in which the HTTP request can be the HTTP request of the registration page, the registration page can be arranged to receive a registration return address of a cloud service server 200, and the authentication page can be arranged to receive the user account and the user password and confirm whether the user password and the user account are correct. The network storage server 400 can transmit the registration page to the web browser when the user account and the user password are correct. After the user inputs the registration information of the cloud service page on the registration page, the processor 406 enables the communication device 402 to transmit an authorization token to the cloud service server 200 according to the registration return address of the cloud service server 200, in which the processor 406 can produce the authorization token according to the registration information. Moreover, the processor 406 can also store the authorization token into the system block 410 of the storage device 404.

In one of the embodiments, the processor 406 can receive the authorization token from the cloud service server 200 by the communication device 402, and verify the authorization token. Namely, the processor 406 compares the authorization token stored in the system block 410 of the storage device 404 with the authorization token received from the cloud service server 200. When the authorization tokens are met, the processor 406 allows the cloud service page provided by the cloud service server 200 to access the data stored in the data block 404 of the storage device 404.

In one of the embodiments, when the network storage server 400 receives the HTTP request of the file operation page from the user device 300, the processor 406 can enable the communication device 402 to provide the file operation page to the web browser, in which the file operation page can include a user interface, such that the user device 300 can use the UI to access the files stored in the storage device 404. The UI of the file operation page can receive a selecting signal and the processor 406 can select the files in response to the selecting signal, and the file operation interface can show a column. Next, the file operation interface enables the web browser to use the received address of the cloud service page to connect to the cloud service page according to the user operation, in which the address information can be found in the column.

In another embodiment, the UI of the file operation page is arranged to receive a selecting signal and select one of the files in response to the selecting signal, and the processor 406 further shows a list including a plurality of cloud services images, in which each of the cloud services images corresponds to an address of a unique cloud service page of a unique cloud service server, and the list can be stored in the system block 410 of the storage device 404. Next, the UI of the file operation page can be utilized to select a specific cloud services image of the cloud services images in response to the user's operation, and enable the web browser to transmit an HTTP request to a specific cloud service server having a specific cloud service page corresponding to the specific cloud services image. Therefore, the file operation interface can enable the web browser to use the address of the specific cloud service page to connect to the specific cloud service page, in which the specific cloud service page can be used to process/edit the selected file.

In some of the embodiments, the system block 410 of the storage device 404 of the network storage server can include a register table arranged to record the information of the registered cloud service server.

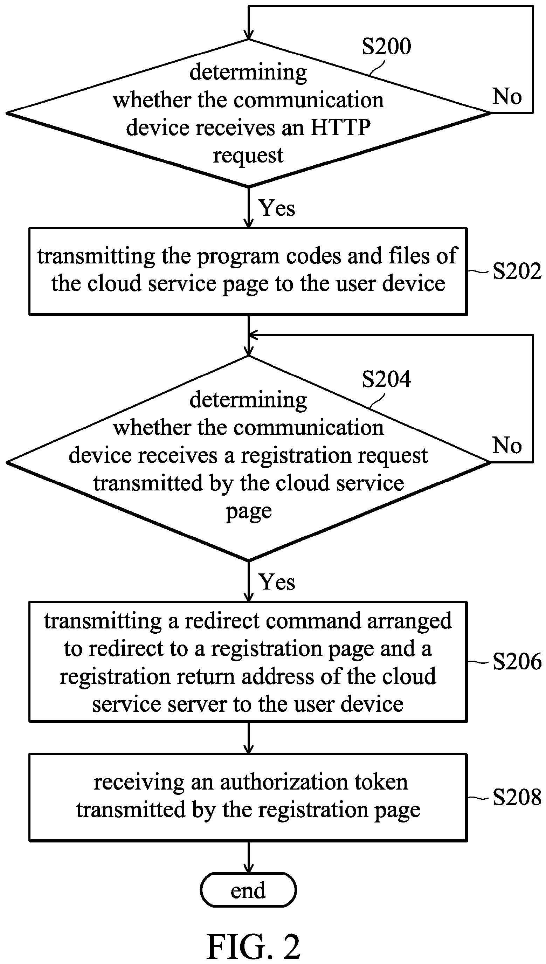

FIG. 2 is a flowchart of a method for managing a cloud service server in accordance with an embodiment. The method for managing a cloud service server is applied to the cloud service server 200 of FIG. 1. The process starts at step S200.

In step S200, the processor 206 of the cloud service server 200 determines whether the communication device 202 receives an HTTP request from the user device 300 through the Internet 500. When the processor 206 determines that the communication device 202 receives an HTTP request from the user device 300 through the Internet 500, the process goes to step S202, otherwise the process returns to step S200, the processor 206 of the cloud service server 200 continues to determine whether the communication device 202 receives an HTTP request from the user device 300 through the Internet 500.

In step S202, the processor 206 of the cloud service server 200 is arranged to enable the communication device 202 to transmit the program codes and files of the cloud service page to the user device 300 through the Internet 500 in response to the received HTTP request, such that the user device 300 can show the cloud service page by using the received program codes and files. It should be noted that the operation interface of the cloud service page may have a column, and the column is arranged to input a registration request by the user of the user device 300 for performing registration and the above steps of registering the cloud service page of the cloud service server 200 on the network storage server 400.

Next, in step S204, the processor 206 of the cloud service server 200 determines whether the communication device 202 receives a registration request transmitted (returned) by the cloud service page through the Internet 500. When the processor 206 of the cloud service server 200 determines that the communication device 202 has received a registration request transmitted by the cloud service page through the Internet 500, the process goes to step S206, otherwise the process returns to step S204, and the processor 206 of the cloud service server 200 continues to determine whether the communication device 202 receives a registration request transmitted by the cloud service page through the Internet 500.

Next, in step S206, the processor 206 of the cloud service server 200 enables the communication device 202 to transmit a redirect command arranged to redirect to a registration page of the network storage server 400 and a registration return address of the cloud service server 200 to the user device 300 through the Internet 500 in response to the received registration request including an address of the registration page of the network storage server 400. Namely, the user needs to input the address of the registration page of the network storage server 400 on the column of the cloud service page, and the user device needs to transmit the address of the registration page to the cloud service server 200, such that the cloud service server 200 can obtain the address of the registration page of the network storage server 400. Next, the processor 206 produces the redirect command according to the registration page included in the registration request. Namely, the processor 206 produces the redirect command according to the address of the registration page included in the registration request, and transmits the redirect command to the user device 300 by the communication device 202, such that the user device 300 can connect to the registration page of the network storage server 400 in response to the redirect command to perform registration.

Next, in step S208, the communication device 202 of the cloud service server 200 receives an authorization token transmitted by the registration page of a network storage server 400 through the Internet 500, in which a cloud service page of the cloud service server 200 can access the data stored in the network storage server 400 by using the authorization token. The process ends at step S208.

The method for managing a cloud service server and the cloud service server of the present invention can enable registration between the network storage server created by general users and third-party cloud applications.

While the invention has been described by way of example and in terms of the preferred embodiments, it is to be understood that the invention is not limited to the disclosed embodiments. On the contrary, it is intended to cover various modifications and similar arrangements (as would be apparent to those skilled in the art). Therefore, the scope of the appended claims should be accorded the broadest interpretation so as to encompass all such modifications; the invention is defined by the scope of the claims.

## Claims

1. A method for managing a cloud service server (200), the method comprising:
receiving, by the cloud service server (200), an HTTP request from a user device (300) through the Internet (500);
transmitting, by the cloud service server (200), a cloud service page to the user device (300) through the Internet (500) in response to the HTTP request;
receiving, by the cloud service server (200), a registration request transmitted by the user device through the cloud service page, wherein the registration request includes an address of a registration page of a network storage server (400);
producing, by the cloud service server (200), a redirect command according to the address of the registration page included in the registration request; and
transmitting, by the cloud service server (200), the redirect command to the user device (300) through the Internet (500) in response to the registration request for allowing the user device (300) to register the cloud service page with the network storage server (400) through the registration page, wherein the redirect command is configured to redirect the user device (300) to the registration page of the network storage server (400).

2. The method as claimed in claim 1, wherein the transmitting of the redirect command to the user device (300) through the Internet (500) in response to the registration request further comprises:
transmitting a registration return address of the cloud service server (200) to the user device (300).

3. The method as claimed in claim 1 or 2, wherein after the user device (300) registers the cloud service page with the network storage server (400) through the registration page, the network storage server (400) transmits an authorization token to the cloud service server (200) through the registration return address.

4. The method as claimed in claim 3, further comprising:
accessing data of the network storage server (400) by using the authorization token.

5. The method as claimed in any of the previous claims, wherein after the network storage server (400) verifies the user device (300), the network storage server (400) allows the user device (300) to register the cloud service page with the network storage server (400) through the registration page.

6. A cloud service server (200), providing cloud computing services, comprising:
a storage device (201), storing a cloud service page;
a communication device (202), transmitting data to the Internet (500) and receiving data from the Internet (500); and
a processor (206), wherein the processor executes program code stored in the storage device to execute:
enabling the communication device (202) to receive an HTTP request from a user device (300) through the Internet (500);
enabling the communication device (202) to transmit the cloud service page to the user device (300) through the Internet (500) in response to the HTTP request; enabling the communication device (202) to receive a registration request transmitted by the user device through the cloud service page, wherein the registration request includes an address of a registration page of a network storage server (400);
producing a redirect command according to the address of the registration page included in the registration request; and
enabling the communication device (202) to transmit the redirect command to the user device (300) through the Internet (500) in response to the registration request for allowing the user device (300) to register the cloud service page with the network storage server (400) through the registration page, wherein the redirect command is configured to redirect the user device (300) to the registration page of the network storage server (400).

7. The cloud service server (200) as claimed in claim 6, wherein the processor (206) further enables the communication device (202) to transmit a registration return address of the cloud service server (200) to the user device (300) through the Internet (500).

8. The cloud service server (200) as claimed in claim 6 or 7, wherein after the user device (300) registers the cloud service page with the network storage server (400) through the registration page, the network storage server (400) transmits an authorization token to the cloud service server (200) according to the registration return address.

9. The cloud service server (200) as claimed in claim 8, wherein the cloud service page accesses data of the network storage server (400) by using the authorization token.

10. The cloud service server (200) as claimed in any of claims 6 to 9, wherein after the network storage server (400) verifies the user device (300), the network storage server (400) allows the user device (300) to register the cloud service page with the network storage server (400) through the registration page.

## Patentansprüche

1. Verfahren zum Managen eines Cloud-Dienst-Servers (200), wobei das Verfahren die Schritte aufweist:
Empfangen einer HTTP-Anfrage von einem Benutzergerät (300) durch den Cloud-Dienst-Server (200) über das Internet (500);
Übertragen einer Cloud-Dienst-Seite durch den Cloud-Dienst-Server (200) an das Benutzergerät (300) über das Internet (500) in Antwort auf die HTTP-Anfrage;
Empfangen einer durch das Benutzergerät über die Cloud-Dienst-Seite übertragenen Registrierungsanforderung durch den Cloud-Dienst-Server (200), wobei die Registrierungsanforderung eine Adresse einer Registrierungsseite eines Netzwerkspeicherservers (400) enthält;
Erzeugen eines Umleitungsbefehls durch den Cloud-Dienst-Server (200) gemäß der in der Registrierungsanforderung enthaltenen Adresse der Registrierungsseite; und
Übertragen des Umleitungsbefehls durch den Cloud-Dienst-Server (200) an das Benutzergerät (300) über das Internet (500) in Antwort auf die Registrierungsanforderung, um es dem Benutzergerät (300) zu ermöglichen, die Cloud-Dienst-Seite über die Registrierungsseite auf dem Netzwerkspeicherserver (400) zu registrieren, wobei der Umleitungsbefehl dafür konfiguriert ist, das Benutzergerät (300) zur Registrierungsseite des Netzwerkspeicherservers (400) umzuleiten.

2. Verfahren nach Anspruch 1, wobei das Übertragen des Umleitungsbefehls an das Benutzergerät (300) über das Internet (500) in Antwort auf die Registrierungsanforderung ferner das Übertragen einer Registrierungsrücksendeadresse des Cloud-Dienst-Servers (200) an das Benutzergerät (300) aufweist.

3. Verfahren nach Anspruch 1 oder 2, wobei, nachdem das Benutzergerät (300) die Cloud-Dienst-Seite über die Registrierungsseite im Netzwerkspeicherserver (400) registriert hat, der Netzwerkspeicherserver (400) über die Registrierungsrücksendeadresse ein Autorisierungstoken an den Cloud-Dienst-Server (200) überträgt.

4. Verfahren nach Anspruch 3, ferner mit dem Schritt zum Zugreifen auf Daten des Netzwerkspeicherservers (400) unter Verwendung des Autorisierungstokens.

5. Verfahren nach einem der vorhergehenden Ansprüche, wobei, nachdem der Netzwerkspeicherserver (400) das Benutzergerät (300) verifiziert hat, der Netzwerkspeicherserver (400) es dem Benutzergerät (300) erlaubt, die Cloud-Dienst-Seite über die Registrierungsseite auf dem Netzwerkspeicherserver (400) zu registrieren.

6. Cloud-Dienst-Server (200), der Cloud-Computing-Dienste bereitstellt, mit:
einer Speichereinrichtung (201), die eine Cloud-Dienst-Seite speichert;
einer Kommunikationseinrichtung (202), die Daten an das Internet (500) überträgt und Daten vom Internet (500) empfängt; und
einem Prozessor (206), wobei der Prozessor einen in der Speichereinrichtung gespeicherten Programmcode ausführt, um die Schritte auszuführen:
Ermöglichen, dass die Kommunikationseinrichtung (202) eine HTTP-Anfrage von einem Benutzergerät (300) über das Internet (500) empfängt;
Ermöglichen, dass die Kommunikationseinrichtung (202) die Cloud-Dienst-Seite in Antwort auf die HTTP-Anforderung über das Internet (500) an das Benutzergerät (300) überträgt
Ermöglichen, dass die Kommunikationseinrichtung (202) eine durch das Benutzergerät über die Cloud-Dienst-Seite übertragene Registrierungsanforderung empfängt, wobei die Registrierungsanforderung eine Adresse einer Registrierungsseite eines Netzwerkspeicherservers (400) enthält;
Erzeugen eines Umleitungsbefehls gemäß der in der Registrierungsanforderung enthaltenen Adresse der Registrierungsseite; und
Ermöglichen, dass die Kommunikationseinrichtung (202) den Umleitungsbefehl in Antwort auf die Registrierungsanfrage über das Internet (500) an das Benutzergerät (300) überträgt, um es dem Benutzergerät (300) zu ermöglichen, die Cloud-Dienst-Seite über die Registrierungsseite auf dem Netzwerkspeicherserver (400) zu registrieren, wobei der Umleitungsbefehl dafür konfiguriert ist, das Benutzergerät (300) zur Registrierungsseite des Netzwerkspeicherservers (400) umzuleiten.

7. Cloud-Dienst-Server (200) nach Anspruch 6, wobei der Prozessor (206) es ferner der Kommunikationseinrichtung (202) ermöglicht, eine Registrierungsrücksendeadresse des Cloud-Dienst-Servers (200) über das Internet (500) an das Benutzergerät (300) zu übertragen.

8. Cloud-Dienst-Server (200) nach Anspruch 6 oder 7, wobei, nachdem das Benutzergerät (300) die Cloud-Dienst-Seite über die Registrierungsseite auf dem Netzwerkspeicherserver (400) registriert hat, der Netzwerkspeicherserver (400) gemäß der Registrierungsrücksendeadresse ein Autorisierungstoken an den Cloud-Dienst-Server (200) überträgt.

9. Cloud- Dienst-Server (200) nach Anspruch 8, wobei die Cloud-Dienst-Seite unter Verwendung des Autorisierungstokens auf Daten des Netzwerkspeicherservers (400) zugreift.

10. Cloud-Dienst-Server (200) nach einem der Ansprüche 6 bis 9, wobei, nachdem der Netzwerkspeicherserver (400) das Benutzergerät (300) verifiziert hat, der Netzwerkspeicherserver (400) es dem Benutzergerät (300) erlaubt. die Cloud-Dienst-Seite über die Registrierungsseite auf dem Netzwerkspeicherserver (400) zu registrieren.

## Revendications

1. Procédé de gestion d'un serveur de services sur cloud (200), le procédé comprenant :
la réception par le serveur de services sur cloud (200) d'une requête http provenant d'un dispositif d'utilisateur (300) par internet (500) ;
la transmission, par le serveur de services sur cloud (200), d'une page de service sur cloud au dispositif d'utilisateur (300) par internet (500) en réponse à la requête http ;
la réception, par le serveur de services sur cloud (200), d'une demande d'enregistrement transmise par le dispositif d'utilisateur par la page de service sur cloud, où la demande d'enregistrement comprend une adresse d'une page d'enregistrement d'un serveur de stockage de réseau (400) ;
la production, par le serveur de services sur cloud (200), d'une commande de redirection en fonction de l'adresse de la page d'enregistrement comprise dans la demande d'enregistrement ; et
la transmission, par le serveur de services sur cloud (200), de la commande de redirection vers le dispositif d'utilisateur (300) par internet (500) en réponse à la demande d'enregistrement pour permettre au dispositif d'utilisateur (300) d'enregistrer la page de service sur cloud avec le serveur de stockage de réseau (400) par la page d'enregistrement, où la commande de redirection est configurée pour rediriger le dispositif d'utilisateur (300) vers la page d'enregistrement du serveur de stockage de réseau (400).

2. Procédé selon la revendication 1, dans lequel la transmission de la commande de redirection vers le dispositif d'utilisateur (300) par internet (500) en réponse à la demande d'enregistrement comprend en outre :
la transmission d'une adresse de retour d'enregistrement du serveur de services sur cloud (200) au dispositif d'utilisateur (300).

3. Procédé selon la revendication 1 ou 2, dans lequel, après que le dispositif d'utilisateur (300) ait enregistré la page de service sur cloud avec le serveur de stockage de réseau (400) par la page d'enregistrement, le serveur de stockage de réseau (400) transmet un jeton d'autorisation au serveur de service sur cloud (200) par l'adresse de retour d'enregistrement.

4. Procédé selon la revendication 3, comprenant en outre :
des données d'accès du serveur de stockage de réseau (400) en utilisant le jeton d'autorisation.

5. Procédé selon l'une quelconque des revendications précédentes, dans lequel, après que le serveur de stockage de réseau (400) ait vérifié le dispositif d'utilisateur (300), le serveur de stockage de réseau (400) permet au dispositif d'utilisation (300) d'enregistrer la page de service sur cloud avec le serveur de stockage de réseau (400) par la page d'enregistrement.

6. Serveur de services sur cloud (200), fournissant des services informatiques sur cloud, comprenant :
un dispositif de stockage (201) stockant une page de service sur cloud ;
un dispositif de communication (202), transmettant des données à internet (500) et recevant des données d'internet (500) ; et
un processeur (206), où le processeur exécute un code de programme stocké dans le dispositif de stockage pour exécuter :
une habilitation pour que le dispositif de communication (202) reçoive une requête http d'un dispositif d'utilisateur (300) par internet (500) ;
une habilitation pour que le dispositif de communication (202) transmette la page de service sur cloud au dispositif d'utilisateur (300) par internet (500) en réponse à la requête http ; habilitant le dispositif de communication (202) à recevoir une demande d'enregistrement transmise par le dispositif d'utilisateur par la page de service sur cloud, où la demande d'enregistrement comprend une adresse d'une page d'enregistrement d'un serveur de stockage de réseau (400) ;
la production d'une commande de redirection en fonction de l'adresse de la page d'enregistrement comprise dans la demande d'enregistrement ; et
une habilitation pour que le dispositif de communication (202) transmette la commande de redirection au dispositif d'utilisateur (300) par internet (500) en réponse à la demande d'enregistrement pour permettre au dispositif d'utilisateur (300) d'enregistrer la page de service sur cloud avec le serveur de stockage de réseau (400) par la page d'enregistrement, où la commande de redirection est configurée pour rediriger le service d'utilisateur (300) vers la page d'enregistrement du serveur de services de réseau (400).

7. Serveur de services sur cloud (200) selon la revendication 6, dans lequel le processeur (206) habilite en outre le dispositif de communication (202) à transmettre une adresse de retour d'enregistrement du serveur de services sur cloud (200) au dispositif d'utilisateur (300) par internet (500).

8. Serveur de services sur cloud (200) selon la revendication 6 ou 7, dans lequel, après que le dispositif d'utilisateur (300) ait enregistré la page de service sur cloud avec le serveur de stockage de réseau (400) par la page d'enregistrement, le serveur de stockage de réseau (400) transmet un jeton d'autorisation au serveur de services sur cloud (200) en fonction de l'adresse de retour d'enregistrement.

9. Serveur de services sur cloud (200) selon la revendication 8, dans lequel la page de service sur cloud accède à des données du serveur de stockage de réseau (4400) par l'utilisation du jeton d'autorisation.

10. Serveur de services sur cloud (200) selon l'une quelconque des revendications 6 à 9, dans lequel, après que le serveur de stockage de réseau (400) ait vérifié le dispositif d'utilisateur (300), le serveur de stockage de réseau (400) permet au dispositif d'utilisateur (300) d'enregistrer la page de service sur cloud avec le serveur de stockage de réseau (400) par la page d'enregistrement.
